# EUROPEAN PATENT SPECIFICATION

(11) **EP 3 179 693 B1**
(45) Date of publication and mention of the grant of the patent: **25.12.2019**
(21) Application number: 16192070.7
(22) Date of filing: 03.10.2016
(51) Int. Cl.: H04L 29/06, H04W 12/08, H04L 29/08, H04W 4/60

(54) **METHOD, APPARATUS, STORAGE MEDIUM AND COMPUTER PROGRAM PRODUCT FOR ESTABLISHING A DATA CONNECTION**
VERFAHREN, VORRICHTUNG, SPEICHERMEDIUM UND COMPUTERPROGRAMMPRODUKT FÜR DEN DATENVERBINDUNGSAUFBAU
PROCÉDÉ, DISPOSITIF, SUPPORT DE STOCKAGE ET ET PRODUIT PROGRAMME INFORMATIQUE DESTINÉS À ÉTABLIR UNE CONNEXION DE DONNÉES

(30) Priority: 11.12.2015 CN 201510919039
(43) Date of publication of application: 14.06.2017
(73) Proprietor: Xiaomi Inc., Beijing 100085 (CN)
(72) Inventor: WU, Nan, Haidian District, Beijing 100085 (CN); GAO, Yingjun, Haidian District, Beijing 100085 (CN); HE, Chao, Haidian District, Beijing 100085 (CN)
(74) Representative: Robson, Aidan John

(56) References cited:
- CN-A- 104 980 920
- US-A1- 2011 286 460
- US-B2- 8 423 602

## Description

### FIELD

The present disclosure generally relates to the technical field of network, and more particularly to a method and a device for establishing a data connection.

### BACKGROUND

With the explosive development of the network technology, the data service of smart devices has been developed rapidly. Different smart devices may perform data transmission via establishing a data connection. For example, if a data connection is established between a smart phone and a smart television, the data could be transmitted from the smart phone to the smart television.

In related art, device may install different applications, and one device may perform data transmission with another device via the installed application, even one device may perform data transmission with another device via multiple applications. For example, when it is expected to perform data transmission between an application A in a smart phone and an application A* in a smart television, the smart phone could establish a data connection with a Port A of the smart television, while it is expected to perform data transmission between an application B in the smart phone and an application B* in the smart television, the smart phone could establish a data connection with a Port B of the smart television.

US 2011/286460 A1 describes a method and apparatus for negotiated secure fast table lookups for protocols with bidirectional identifiers. In particular, during each connection establishment sequence for a connection of a protocol with bidirectional identifiers, a network element allocates connection data for the connection, sets the locally significant identifier as a pointer to the allocated connection data, applies mathematical transformation to the locally significant identifier, includes the locally significant identifier and a result of the mathematical transformation in a connection establishment packet, and transmits the connection establishment packet to the peer network element. When the network element receives a data packet from the peer network element, the network element extracts the locally selected identifier and the result of the mathematical transformation, applies the same mathematical transformation to the extracted locally selected identifier, and compares the result of the mathematical transformation to the extracted locally selected identifier. If they match, the network element dereferences the value of the extracted locally selected identifier to access the connection data that corresponds to the data packet. US8423602 B2 publishes enabling asynchronous callback and broadcast notification between a server and a client software application in a network for implementing asynchronous broadcast web services.

### SUMMARY

The present invention is defined by the appended independent claims. Embodiments of the present disclosure provide a method and a device for establishing a data connection. The technical solutions are as follows.

According to a first aspect of the embodiments of the present disclosure, a method for establishing a data connection is provided, comprising: receiving, via a User Datagram Protocol (UDP)-based Data Transfer Protocol (UDT) module in a present end, a data packet transmitted by a terminal, the data packet carrying an identifier of a target application and transmission data; extracting the identifier of the target application; based on the identifier of the target application and a preset callback function mapping table, determining a target callback function corresponding to the target application, the preset callback function mapping table including at least one identifier of at least one application and at least one corresponding callback function, wherein the target callback function is configured to transmit the transmission data to a data memory address corresponding to the target application; running the target callback function to transmit the transmission data to the target application.

The method further comprises, before the receiving a data packet transmitted by a terminal: receiving, via the UDT module, a registration message transmitted by an application in the present end, the registration message carrying an identifier of the application and a callback function; storing the identifier of the application and the callback function in pairs into the preset callback function mapping table.

In a second possible implementation of the first aspect of the embodiments of the present disclosure, the method further comprising: receiving, transmitted by the terminal, a request for establishing a connection; establishing the data connection with the terminal.

Combining the first aspect of the embodiments of the present disclosure and the second possible implementation of the first aspect of the embodiments of the present disclosure, in a third possible implementation, the establishing the data connection with the terminal comprising: detecting whether an idle port exists in the present end or not; establishing the data connection with the terminal via the idle port when the idle port exits in the present end.

In a fourth possible implementation of the first aspect of the embodiments of the present disclosure, the receiving a data packet transmitted by a terminal comprising: receiving different types of data packets transmitted by the terminal via different data connections established with the terminal, the type of the data packet being determined by at least one of the transmission frequency of the data packet and the size of the data packet.

According to a second aspect of the embodiments of the present disclosure, a device for establishing a data connection is provided, comprising: a receiving module configured to receive, via a User Datagram Protocol (UDP)-based Data Transfer Protocol (UDT) module in a present end, a data packet transmitted by a terminal, the data packet carrying an identifier of a target application and transmission data; an extracting module configured to extract the identifier of the target application; a determining module configured to, based on the identifier of the target application extracted by the extracting module and a preset callback function mapping table, determine a target callback function corresponding to the target application, the preset callback function mapping table including at least one identifier of at least one application and at least one corresponding callback function, wherein the target callback function is configured to transmit the transmission data to a data memory address corresponding to the target application; a running module configured to run the target callback function determined by the determining module to transmit the transmission data to the target application.

The receiving module is further configured to receive, via the UDT Module a registration message transmitted by an application in the present end, the registration message carrying the identifier of the application and a callback function; the device further comprises: a storing module configured to store the identifier of the application and the callback function in pairs into the preset callback function mapping table.

In a second possible implementation of the second aspect of the embodiments of the present disclosure, the receiving module is further configured to receive, transmitted by the terminal, a request for establishing a connection; the device further comprises: an establishing module configured to establish the data connection with the terminal.

Combining the second aspect of the embodiments of the present disclosure and the second possible implementation of the second aspect of the embodiments of the present disclosure, in a third possible implementation, the device further comprising: a detecting module configured to detect whether an idle port exists in the present end or not; the establishing module is further configured to establish the data connection with the terminal via the idle port when the detecting module determines that the idle port exists in the present end.

In a fourth possible implementation of the second aspect of the embodiments of the present disclosure, the receiving module is further configured to receive different types of data packets transmitted by the terminal via different data connections established with the terminal, the type of the data packet being determined by at least one of the transmission frequency of the data packet and the size of the data packet.

According to a third aspect of the embodiments of the present disclosure, a storage medium is provided, the storage medium readable by a computer and having stored thereon a computer program including instructions for executing the steps of a method for establishing a data connection according to the first aspect of the embodiments of the present disclosure.

According to a fourth aspect of the embodiments of the present disclosure, a computer program product is provided, computer program including instructions for executing the steps of a method for establishing a data connection according to the first aspect of the embodiments of the present disclosure when said program is executed by a computer.

Embodiments of the present disclosure may provide at least some of the following beneficial effects:

Through extracting the identifier of the target application carried in the data packet transmitted by a terminal, determining a target callback function based on the identifier of the target application and a preset callback function mapping table, and running the target callback function to transmit the transmission data to the target application, the received data packets may be managed and transmitted uniformly, such that it is not necessary to establish too many connections between the terminal and ports, and port resources may be saved.

It is to be understood that the forgoing general description and the following detailed description are illustrative only, and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow diagram illustrating a method for establishing a communication connection according to an exemplary embodiment.
Fig. 2A a flow diagram illustrating a method for establishing a communication connection according to another exemplary embodiment.
Fig. 2B is a schematic diagram for establishing a communication connection related to the embodiment of Fig. 2A.
Fig. 2C is another schematic diagram for establishing a communication connection related to the embodiment of Fig. 2A.
Fig. 2D is a schematic diagram of a data packet related to the embodiment of Fig. 2A.
Fig. 3 is a block diagram illustrating a device for establishing a communication connection according to an exemplary embodiment.
Fig. 4 is a block diagram illustrating a device for establishing a communication connection according to another exemplary embodiment.
Fig. 5 is a block diagram illustrating a terminal 500 according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present disclosure. Instead, they are merely examples of devices and methods consistent with aspects related to the present disclosure as recited in the appended claims.

The method disclosed in the embodiments of the present disclosure may be applied into an intelligent device with a variety of applications mounted thereon, the intelligent device may perform data transmission with other intelligent devices via the mounted applications. The aforementioned intelligent device may be an intelligent household such as an intelligent television, an intelligent speaker and the like, or may be a terminal such as a cellphone, a tablet, a computer and the like.

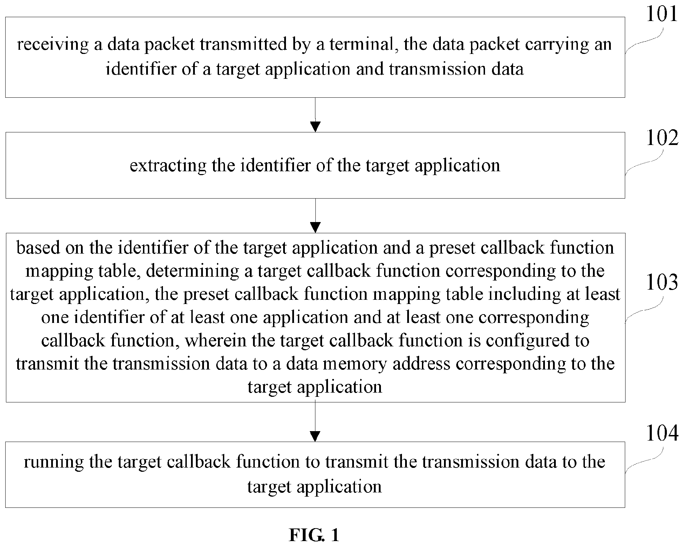

Fig. 1 is a flow diagram illustrating a method for establishing a communication connection according to an exemplary embodiment. The method for establishing a data connection may include the following steps.

In step 101, a data packet transmitted by a terminal may be received, the data packet may carry an identifier of a target application and transmission data.

In step 102, the identifier of the target application may be extracted.

In step 103, based on the identifier of the target application and a preset callback function mapping table, a target callback function corresponding to the target application may be determined, the preset callback function mapping table may include at least one identifier of at least one application and at least one corresponding callback function, wherein the target callback function may be configured to transmit the transmission data to a data memory address corresponding to the target application.

In step 104, the target callback function may be performed to transmit the transmission data to the target application.

Through extracting the identifier of the target application carried in the data packet transmitted by a terminal, determining a target callback function based on the identifier of the target application and a preset callback function mapping table, and running the target callback function to transmit the transmission data to the target application, the method provided by the embodiments of the disclosure may uniformly manage and transmit the received data packets, such that it is not necessary to establish too many connections between the terminal and ports, and port resources may be saved.

Based on the method provided above, in a possible implementation, the method further comprising, before the receiving a data packet transmitted by a terminal: receiving a registration message transmitted by an application in a present end, the registration message carrying an identifier of the application and a callback function; storing the identifier of the application and the callback function in pairs into the preset callback function mapping table.

Through receiving a registration message transmitted by an application on a present end and storing the identifier of the application and the callback function carried in the registration into the preset callback function mapping table, the callback function may be determined according to the identifier of the target application when the data packet is received, such that transmitting the received transmission data to the corresponding application may be implemented.

In another possible implementation, the method further comprising: receiving, transmitted by the terminal, a request for establishing a connection; establishing the data connection with the terminal.

Through receiving a request for establishing a connection and establishing the data connection with the terminal, performing data transmission with the terminal may be implemented.

In another possible implementation, the establishing the data connection with the terminal comprising: detecting whether an idle port exists in the present end or not; establishing the data connection with the terminal via the idle port when the idle port exits in the present end.

Through establishing the data connection with the terminal via the detected idle port, establishing different data connections may be satisfied when it is expected to establish different connections by the terminal.

In another possible implementation, the receiving a data packet transmitted by a terminal comprising: receiving different types of data packets transmitted by the terminal via different data connections established with the terminal, the type of the data packet being determined by at least one of the transmission frequency of the data packet and the size of the data packet.

Through receiving different types of data packets via different data connections established with the terminal, the interference between the different types of data packets may be avoided, and the utilization efficiency of the ports may be improved.

Above optional technical solutions may be arbitrarily combined to form the optional embodiments of the present disclosure, which will not be elaborated herein.

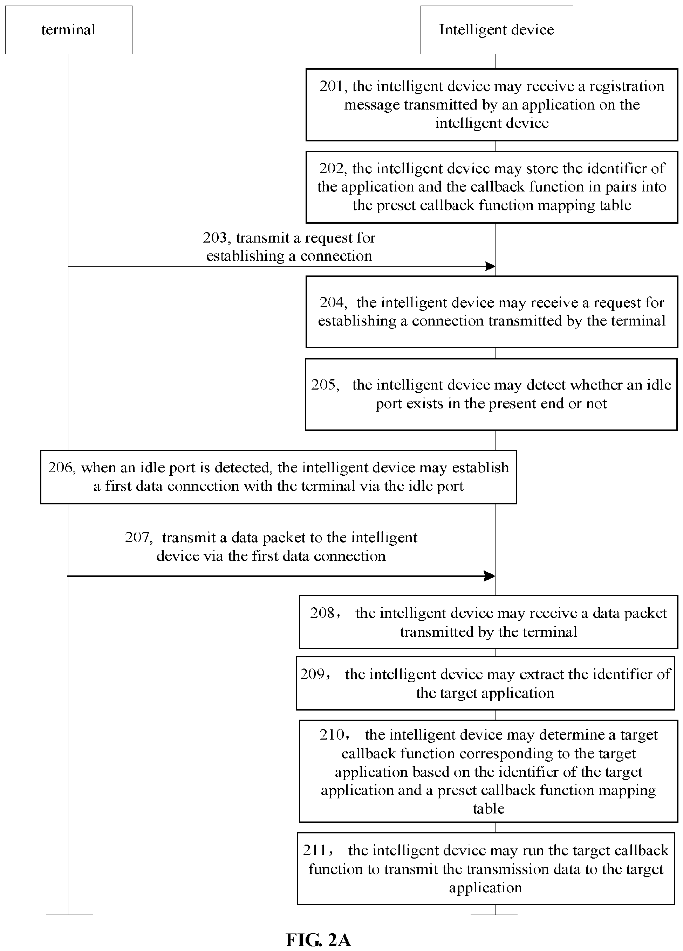

Fig. 2A a flow diagram illustrating a method for establishing a communication connection according to another exemplary embodiment, the embodiment may be illustrated as the method for establishing a data connection being performed by an intelligent device. The method for establishing a data connection may include the following steps.

In step 201, the intelligent device may receive a registration message transmitted by an application on the intelligent device, the registration message may carry an identifier of the application and a callback function.

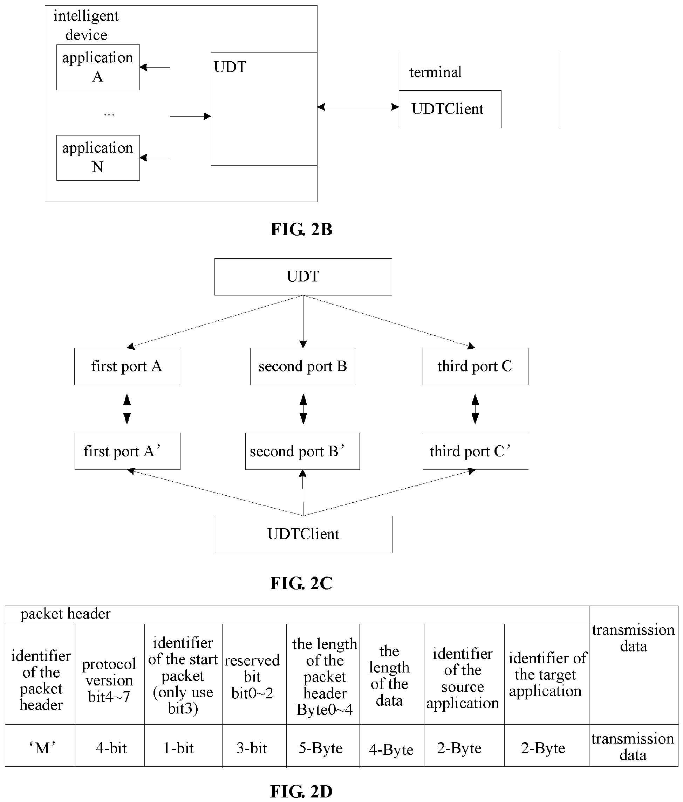

Referring to Fig. 2B, the method provided by the embodiments of the present application may establish an UDT (UDP-based Data Transfer Protocol, UDP is User Datagram Protocol) module, the UDT module may be configured to uniformly receive and transmit data.

In order to enable the intelligent device to transmit the received transmission data to the corresponding application, the application on the intelligent device may automatically transmit the registration message to the UDT module when the starting of the intelligent device is detected. Wherein, the registration message may carry the identifier of the application and the callback function, the identifier of the application may be configured to uniquely identify the application, and the identifier of the application may be corresponding to the callback function, namely the intelligent device may uniquely determine the corresponding callback function according to the identifier of the application, the identifier of the application may be an integer of 16 bits. Wherein, the callback function may be configured to transmit the transmission data to the data memory address corresponding to the application, the callback function may be generated by the application, the callback function may also be transmitted to an intermediary software and then be generated by the intermediary software.

In step 202, the intelligent device may store the identifier of the application and the callback function in pairs into the preset callback function mapping table.

The intelligent device may establish the preset callback function mapping table via above step 201 and step 202 when the UDT module is established, and when the identifier of the application and the callback function transmitted by other applications are received, the identifier of the application and the callback function may be stored into the preset callback function mapping table, and the identifier of the application may be used as the index. Namely the preset callback function mapping table may include at least one identifier of at least one application and at least one corresponding callback function.

In a possible implementation, storing the identifier of the application and the callback function in pairs into the preset callback function mapping table may be a newly added progress, and in particular, the preset callback function mapping table may have stored some correspondence relations between the identifier of the application and the callback function, and the registration message received this time may be newly added, the intelligent device may store the identifier of the application and the callback function carried in the registration message received this time into the preset callback function mapping table. In a possible progress of the implementation, if the registration message received this time is newly added, and if the intelligent device detects that the preset callback function mapping table in the database has already stored the identifier of the application and the callback function carried in the registration message, then the repetitive storage may not be performed.

It is to be noted that there is no successive order of execution between the storing progress in step 202 and the terminal transmitting a request for establishing a connection in step 203, namely the storing progress in step 202 may be performed before the terminal transmitting a request for establishing a connection in step 203, may be performed after the terminal transmitting a request for establishing a connection in step 203, also may be concurrently performed with the terminal transmitting a request for establishing a connection in step 203.

In step 203, the terminal may transmit a request for establishing a connection to the intelligent device.

Referring to Fig. 2B, the terminal may be configured with an UDTClient module, the terminal may transmit a request for establishing a connection to the intelligent device via the UDTClient module before transmitting data to the intelligent device, the UDTClient module may be configured to transmit a request for establishing a connection to the intelligent device.

In practice, the data packets may include various types, if the terminal only establishes a connection with one port of the intelligent device, then the intelligent device may only receive different types of data packets via the same port, such that if the terminal transmits different types of data packets, then a port congestion may occur. Therefore, in order to improve the validity of the transmission of the data packets, the terminal may establish a number of different data connections with the intelligent device according to the types of the data packets to be transmitted. Accordingly, in step 203, the terminal may transmit a request for establishing a connection according to the type of the data packet, wherein the request for establishing a connection may be used to establish a data connection corresponding to the type of the data packet.

Wherein, the type of the data packet may be determined by at least one of the transmission frequency of the data packet and the size of the data packet. For example, a data connection with a higher priority may be established for the data packet which has a higher transmission frequency and a smaller size, while a data connection with a lower priority may be established for the data packet which has a lower transmission frequency and a greater size, the embodiments of the present disclosure may not define the specific priority of the established connection. Different requests for establishing a connection may be transmitted with respect to the aforementioned different types of data packets.

In the embodiments of the present disclosure, the data packet may be classified into three types according to the transmission frequency of the data packet and the size of the data packet.

In a first possible implementation, the data packet may be a first type of data packet. The transmission frequency of the first type of data packet is higher than a first preset frequency, and the size of the first type of data packet is smaller than a first preset threshold. Wherein, the first preset frequency may be set by a system by default, and also may be set by a user according to actual needs. Similarly, the first preset threshold may be set by the system by default, and also may be set by the user according to actual needs. The first type of data packet may be characterized in that it has a higher transmission frequency and a smaller size, for example, the first type of data packet may be chatting contents transmitted by an instant messaging application on the terminal.

In a second possible implementation, the data packet may be a second type of data packet. The transmission frequency of the second type of data packet is lower than a second preset frequency, and the size of the second type of data packet is greater than a second preset threshold. Wherein, the second preset frequency may be set by the system by default, and also may be set by the user according to actual needs. Similarly, the second preset threshold may be set by the system by default, and also may be set by the user according to actual needs. The second type of data packet may be characterized in that it has a lower transmission frequency and a greater size, for example, the second type of data packet may be an audio file transmitted by the terminal.

In a third possible implementation, the data packet may be a third type of data packet. The third type of data packet may be transmitted according to a preset period. Wherein, the preset period may be set by the system by default, and also may be set by the user according to actual needs. The third type of data packet may be referred as a real-time data packet, for example, the third type of data packet may be a control instruction transmitted by the terminal.

For example, when it is expected to transmit a data packet A belonging to the first type of data packet by the terminal, the terminal may transmit a first request for establishing a connection to the intelligent device. When it is expected to transmit a data packet B belonging to the second type of data packet by the terminal, the terminal may transmit a second request for establishing a connection to the intelligent device. Three data connection may be established between one terminal and one intelligent device based on the foregoing three types of data packets. Referring to Fig. 2C, there may be three ports on the terminal, namely a first port A', a second port B' and a third port C', the terminal may establish three connections with the intelligent device via the foregoing three ports by transmitting three requests for establishing a connection.

Additionally, in order to avoid waste, the terminal may detect whether itself has established a same type of data connection with the intelligent device before transmitting any request for establishing a connection. If the same type of data connection is established, the terminal may reuse the data connection. That is, the method further comprises: the terminal may obtain the type of the data packet to be transmitted before transmitting a request for establishing a connection, and may detect whether the UDTClient module has established a data connection for transmitting this type of data packet with the intelligent device, if it is determined that the data connection is not established, the terminal may transmit a request for establishing a connection, otherwise, the terminal may reuse the established data connection for transmitting this type of data packet.

For example, when it is expected to transmit a data packet A belonging to the first type of data packet by the terminal, if the terminal detects that the UDTClient module has established a data connection for transmitting the first type of data packet with the intelligent device, the terminal may reuse the data connection to transmit the data packet A to the intelligent device.

In step 204, the intelligent device may receive a request for establishing a connection transmitted by the terminal.

Regardless of the number of the requests for establishing a connection transmitted by the terminal, the intelligent device may process the received requests for establishing a connection in a unique way. Particularly, a listening port may be set in the UDT module of the intelligent device, for example, the port number of the listening port may be 8080. The listening port may be configured to receive the request for establishing a connection transmitted by the terminal. When it is expected to establish a connection between the terminal and the intelligent device, the terminal may transmit the request for establishing a connection to the listening port, and the intelligent device may receive the request for establishing a connection transmitted by the terminal via the listening port.

In step 205, the intelligent device may detect whether an idle port exists in the present end or not, and if so, step 206 may be performed.

The intelligent device may have multiple ports which may be in different active conditions such as occupied or idle. Therefore, whether an idle port is existed may be detected so as to determine whether the data connection may be established or not. Referring to Fig. 2C, there may be three ports on the intelligent device, namely a first port A, a second port B and a third port C. If the first port A of the intelligent device is in an idle condition, the subsequent step 206 may be performed, such that a first data connection may be established between the first port A and the terminal.

In step 206, when an idle port is detected, the intelligent device may establish a first data connection with the terminal via the idle port.

As mentioned above, only one data connection is established between the terminal and the intelligent device, and in a possible implementation, a second data connection and a third data connection may be established between the terminal and the intelligent device. Particularly, when the terminal transmits multiple requests for establishing a connection, establishing the second data connection and the third data connection may include any possible implementations as follows.

In a first possible implementation, the terminal has already established the first data connection with the intelligent device. When the terminal transmits another request for establishing a connection, the intelligent device may detect a port being in idle condition, and may establish the second data connection between the port and the terminal. Accordingly, the terminal may establish the connection with the intelligent device via another port.

For example, the terminal has already established the first data connection with the first port A of the intelligent device via the first port A. When the intelligent device receives another request for establishing a connection transmitted by the terminal, if it is detected that the second port B is in idle condition, the second data connection may be established between the second port B and the second port B' of the terminal. Of course, if the third port C is also in idle condition, the intelligent device may select any one of the two ports to establish the second data connection with the terminal.

In a second possible implementation, the terminal has already established the first data connection with the intelligent device, and also has established the second data connection. When the terminal transmits another request for establishing a connection to the intelligent device, the intelligent device may detect a port being in idle condition, and may establish the third data connection between the port and the terminal. Accordingly, the terminal may establish the connection with the intelligent device via a different port.

For example, the terminal has already established the first data connection with the first port A of the intelligent device via the first port A, and also has established the second data connection with the second port B of the intelligent device via the second port B'. When the intelligent device receives another request for establishing a connection transmitted by the terminal, if it is detected that the third port C is in idle condition, the third data connection may be established between the third port C and the third port C' of the terminal.

In step 207, the terminal may transmit a data packet to the intelligent device via the first data connection.

After the first data connection is established between the terminal and the intelligent device, the data packet may be transmitted to the intelligent device via the first data connection.

In a possible implementation, the terminal may select different data connections to transmit different types of data packets according to the different types of the data packets to be transmitted. For example, the terminal may transmit the first type of data packet via the first data connection, transmit the second type of data packet via the second data connection, and transmit the third type of data packet via the third data connection. Of course, the terminal may select the specific data connection freely with respect to the different types of data packet to be transmitted, for example, the terminal may transmit the first type of data packet via the second data connection. However, in general, the same data connection may only be used to transmit the same type of data packet, that is, if the terminal selects to transmit the first type of data packet via the first data connection, the first data connection may only be used to transmit the first type of data packet.

In step 208, the intelligent device may receive a data packet transmitted by the terminal, the data packet may carry an identifier of a target application and transmission data.

The intelligent device may receive different types of data packets transmitted by the terminal via different data connections established with the terminal. Particularly, the intelligent device may receive different types of data packets via different ports according to the data connections selected by the terminal. For example, if the terminal selects to transmit the first type of data packet via the first data connection, the intelligent device may receive the first type of data packet via the port A.

Referring to Fig. 2D, the data packet may include a packet header and transmission data, the packet header may carry an identifier of a target application. The identifier of a target application may indicate the intelligent device to transmit the transmission data to the corresponding application on the intelligent device, the length of the identifier of a target application may be 2B. The transmission data may be the content actually to be transmitted, for example, multimedia data such as audio or video data, or a control instruction, for example, the transmission data may be used to control a virtual object in the game screen displayed on the intelligent device.

Additionally, referring to Fig. 2D, the packet header may also include an identifier of the packet header, a protocol version, an identifier of the start packet, a reserved bit, the length of the packet header, the length of the data and an identifier of the source application.

Wherein, the identifier of the packet header may be configured to locate the data packet, namely the initial position of the data packet may be determined by the identifier of the packet header, for example, the identifier of the packet header may be set as M.

Wherein, the protocol version may be configured to represent the version of the UDT protocol used in transmitting the data packet, the length of the protocol may be 4-bit which may occupy the bit 4 to bit 7 in the packet header.

Wherein, with respect to the identifier of the start packet, a complete resource may be determined according to the identifier of the start packet. Particularly, when a resource is a large resource, it is expected to divide the resource into N data packet, therefore the identifier of the start packet in the first packet may be set as 1 and the identifier of the start packet in the subsequent N-1 data packet may be set as 0. During the receiving progress, when receiving the data packet N+1 in which the identifier of the start packet is set as 1, the foregoing N data packet may be determined as belonging to one resource, so that a complete resource may be determined. The identifier of the start packet may only use the bit 3 in the packet header.

Wherein, the reserved bit may be configured to extend the data packet, the length of the reserved bit may be 3-bit which may occupy the bit 0 to bit 2 in the packet header.

Wherein, the length of the packet header may be configured to represent the total length of the packet header, for example, in an exemplary embodiment, the length of the packet header may be 5-Byte, namely in the data packet, Byte 0 to Byte 4 may be the packet header.

Wherein, the length of the data may be configured to represent the total length of the transmission data, for example, in an exemplary embodiment, the length of the data may be 4-Byte.

Wherein, the identifier of the source application may be configured to identify the application on the terminal by which the data packet is transmitted, the identifier of the source application may be a 16-bit integer, and the length of the identifier of the source application may be 2-Byte.

Of course, the packet header may include other combinations, the present disclosure the present disclosure is not intended to limit in the context.

In step 209, the intelligent device may extract the identifier of the target application.

Referring to Fig. 2D, when the data packet transmitted by the terminal is received, the intelligent device may extract the identifier of the target application from the packet header of the data packet.

In step 210, the intelligent device may determine a target callback function corresponding to the target application according to the identifier of the target application and a preset callback function mapping table.

The intelligent device may use the identifier of the application as the index to determine the target callback function corresponding to the target application from the preset callback function mapping table stored in the database after the identifier of the target application is extracted. Wherein, the target callback function may be configured to transmit the transmission data to a data memory address corresponding to the target application.

In a possible implementation, if the intelligent device does not find the target application corresponding to the target callback function, the received data packet may be discarded. The intelligent device may return an error message to the terminal, so that the terminal may perform a corresponding operation after receiving the error message, such as retransmit the data packet and the like. In this way, in the case that the data packet is not received successfully, the data packet may be discarded in time to avoid to impact the processing of the subsequent received data packet, and the terminal may be able to perform the corresponding operation with the returned error message.

In step 211, the intelligent device may run the target callback function to transmit the transmission data to the target application.

After the target callback function is determined, the intelligent device may run the target callback function to transmit the obtained transmission data to the target application. Particularly, the target callback function may be a copy function, and the target callback function may carry a parameter for the memory address corresponding to the target application. When running the target callback function, the transmission data may be copy into the memory address corresponding to the target application.

Through extracting the identifier of the target application carried in the data packet transmitted by a terminal, determining a target callback function based on the identifier of the target application and a preset callback function mapping table, and running the target callback function to transmit the transmission data to the target application, the method provided by the embodiments of the disclosure may uniformly manage and transmit the received data packets, such that it is not necessary to establish too many connections between the terminal and ports, and port resources may be saved.

The following is the device in the embodiments of the present disclosure which may be used to perform the method in the embodiments of the present disclosure. The details which may not be disclosed in the device in the embodiments of the present disclosure can be referred to the method in the embodiments of the present disclosure.

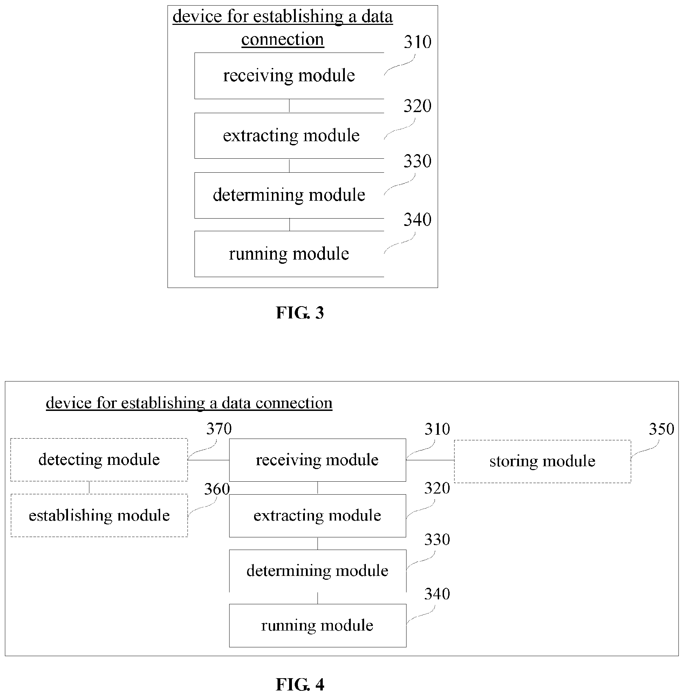

Fig. 3 is a block diagram illustrating a device for establishing a data connection according to an exemplary embodiment, the device for establishing a data connection may be implemented by software, hardware, or the combination thereof. The device for establishing a data connection may include: a receiving module 310 configured to receive a data packet transmitted by a terminal, the data packet carrying an identifier of a target application and transmission data; an extracting module 320 configured to extract the identifier of the target application; a determining module 330 configured to, based on the identifier of the target application extracted by the extracting module and a preset callback function mapping table, determine a target callback function corresponding to the target application, the preset callback function mapping table including at least one identifier of at least one application and at least one corresponding callback function, wherein the target callback function is configured to transmit the transmission data to a data memory address corresponding to the target application; a running module 340 configured to run the target callback function determined by the determining module 330 to transmit the transmission data to the target application.

Through extracting the identifier of the target application carried in the data packet transmitted by a terminal, determining a target callback function based on the identifier of the target application and a preset callback function mapping table, and running the target callback function to transmit the transmission data to the target application, the device provided by the embodiments of the disclosure may uniformly manage and transmit the received data packets, such that it is not necessary to establish too many connections between the terminal and ports, and port resources may be saved.

Referring to Fig.4, based on the foregoing provided device, in a possible implementation, the receiving module 310 may be further configured to receive a registration message transmitted by an application on a present end, the registration message may carry the identifier of the application and a callback function; the device may further comprise: a storing module 350 configured to store the identifier of the application and the callback function in pairs into the preset callback function mapping table.

In another possible implementation, the receiving module 310 may be further configured to receive, transmitted by the terminal, a request for establishing a connection; the device may further comprise: an establishing module 360 configured to establish the data connection with the terminal.

In another possible implementation, the device may further comprise: a detecting module 370 configured to detect whether an idle port exists in the present end or not; the establishing module 360 may be further configured to establish the data connection with the terminal via the idle port when the detecting module 370 determines that the idle port exists in the present end.

In another possible implementation, the receiving module 310 may be further configured to receive different types of data packets transmitted by the terminal via different data connections established with the terminal, the type of the data packet may be determined by at least one of the transmission frequency of the data packet and the size of the data packet.

It is to be noted that, when implementing the method for establishing a data connection, the division of the above functional modules in the device for establishing a data connection provided by the above embodiments are illustrated by way of example. In practice, the above function may be implemented by different functional modules according to actual needs, namely the device may be divided into different functional modules to completely or partly implement the above functions. Additionally, with respect to the device in the above embodiments, the specific manners for performing operations for individual modules therein have been described in detail in the embodiments regarding the method, which will not be elaborated herein.

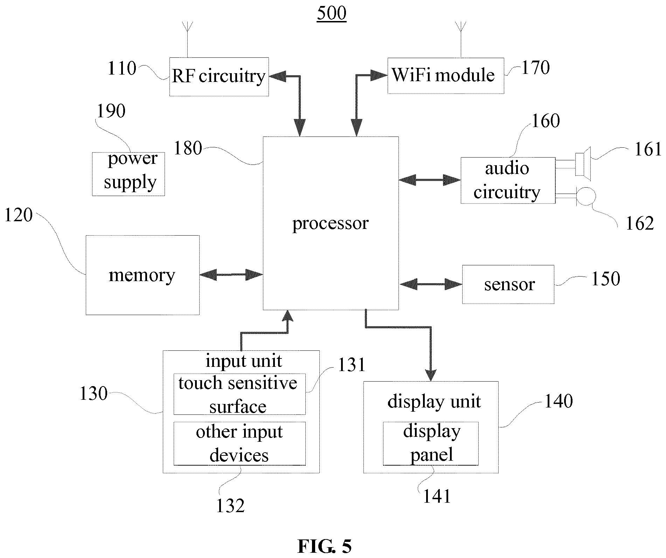

The embodiments provide a terminal which may be configured to perform the method for establishing a data connection provided in the above embodiments. Referring to Fig. 5, the terminal 500 may include the followings.

The terminal 500 may include a RF (Radio Frequency) circuitry 110, a memory 120 including one or more computer readable storage media, an input unit 130, a display unit 140, a sensor 150, an audio circuitry 160, a WiFi (Wireless Fidelity) module 170, a processor 180 including one or more processing cores, and a power supply 190. A person skilled in the art may understand that the structure of the terminal illustrated by Fig.5 is not intended to limit the terminal, and the terminal may include more or less components, or may combine some components, or may include different arrangement of the components.

The RF circuitry 110 may be configured to send and receive messages, or receive or transmit signals during a communication progress. Particularly, after receiving the downlink information from the base station, the RF circuitry 110 may handover the downlink information to one or more processor 180 for processing; in addition, the RF circuitry 110 may transmit the uplink data to the base station. In general, the RF circuitry 110 may include, but not limited to, an antenna, at least one amplifier, a tuner, one or more oscillators, a user identity module (SIM) card, a transceiver, a coupler, a LNA (Low Noise Amplifier), and a duplexer. Additionally, the RF circuitry 110 may also communicate with the network and other device via wireless communication. The wireless communication may use any communication standards and protocols, including but not limited to, GSM (Global System of Mobile communication), GPRS (General Packet Radio Service), CDMA (Code Division Multiple Access), WCDMA (Wideband Code Division Multiple Access), LTE (Long Term Evolution), email, SMS (Short Messaging Service).

The memory 120 may be configured to stored software programs and modules. The processor 180 may perform multiple functional applications and data processing by running the software programs and modules stored in the memory 120. The memory 120 may include an area for storing programs and an area for storing data, wherein, the area for storing programs may store operating system, at least one application required by the functions (such as a function for playing audio and a function for displaying images); the area for storing data may store data created by the terminal 500 (such as audio data and contacts). Additionally, the memory 120 may include a high speed random access memory, and may also include a nonvolatile memory, such as at least one disk storage device, a flash memory device, or other volatile solid storage devices. Accordingly, the memory 120 may also include a memory controller so as to enable the processor 180 and the input unit 130 to access the memory 120.

The input unit 130 may be configured to receive the input numeral or alphabet information, and to generate keyboard, mouse, lever, optical, or trackball signal inputs related to user settings and function control. Particularly, the input unit 130may include a touch sensitive surface 131 and other input devices 132. The touch sensitive surface 131 (also referred as a touch display screen or a touchpad) may collect the touch operations performed by the user thereon or thereby (such as the user may use an object or an accessory such as a finger, a touch pen to perform operations on the touch sensitive surface 131 or near the touch sensitive surface 131), and may drive a corresponding connecting device based on a preset program. Alternatively, the touch sensitive surface 131 may include a touch detecting device and a touch controller. Wherein, the touch detecting device may detect a position touched by the user, detect a signal generated by the touch operation, and transmit the signal to the touch controller; the touch controller may receive the touch information from the touch detecting device and transfer the touch information into contact coordinates, the touch controller may transmit the contact coordinates to the processor 180, receive a instruction transmitted by the processor 180, and perform the instruction. Additionally, the touch sensitive surface 131 may be implemented with resistances, capacitances, infrared rays, and surface acoustic waves. In addition to the touch sensitive surface 131, the input unit 130 may also include the other input devices 132. Particularly, the other input devices 132 may include, but not limited to, one or more of a physical keyboard, a function key (such as a volume control button and a switch button), a trackball, a mouse, a lever.

The display unit 140 may be configured to display the information input by the user or to be provided to the user and a variety of graphical user interfaces of the terminal, these graphical user interfaces may be consist of a graph, a text, an icon, a video, an any combinations thereof. The display unit 140 may include a display panel 141, alternatively, the display panel 141 may be configured as a LCD (Liquid Crystal Display) and a OLED (Organic Light-Emitting Diode). Further, the touch sensitive surface 131 may cover the display panel 141. When the touch sensitive surface 131 detects a touch operation performed thereon or thereby, the touch operation may be transmitted to the processor 180 so that the type of the touch event may be determined. The processor 180 may provide a corresponding visual output to the display panel 141 according to the type of the touch event. Although the touch sensitive surface 131 and the display panel 141 are illustrated as individual components to implement the input function and the output function in Fig. 5, the touch sensitive surface 131 and the display panel 141 may be integrated to implement the input function and the output function in some embodiments.

The terminal 500 may also include at least one sensor 150, such as an optical sensor, a motion sensor, and other sensors. Particularly, the optical sensor may include an ambient light sensor and a proximity sensor, wherein, the ambient light sensor may adjust the luminance of the display panel 141 according to the ambient light, the proximity sensor may close the display panel 141 and/or the backlight when the terminal 500 is moved to the ear. The gravity accelerometer which is a motion sensor may detect the acceleration of all directions (generally, three axises), and may detect the gravity and the direction thereof when it is static, the gravity and the direction thereof may be utilized by applications for identifying the attitude of the cellphone (such as horizontal-vertical switching of the screen, related games, and magnetometer calibration) and functions related to vibration identification (such as a pedometer and knock on). The terminal 500 may also include other sensors such as a gyroscope, a pressure meter, a moisture meter, a thermometer, a infrared sensor, which will not be elaborated herein.

The audio circuitry 160, the speaker 161, and the microphone 162 may provide an audio interface between the user and the terminal 500. The audio circuitry 160 may transmit the electrical signal transformed from the received audio data to the speaker 161, and the speaker 161 may transform the electrical signal to the acoustical signal so as to output it. On the other hand, the microphone 162 may transform the collected acoustical signal into the electrical signal, the audio circuitry 160 may receive the electrical signal and transform the electrical signal into the audio data, then the audio data may be output to the processor 180 for processing, and the RF circuitry may transmit the processed audio data to another terminal, alternatively, the audio data may be output to the memory 120. The audio circuitry 160 may include an earplug jack which may enable the communication between the headset and the terminal 500.

The WiFi belongs to the short distance wireless transmission technology. The terminal 500 may send and receive emails, browse webpage, and access to streaming media via the WiFi module 170. The WiFi module 170 may provide wireless broadband Internet access. Although the WiFi module 170 is illustrated in Fig. 5, it is to be understood that the WiFi module 170 is not necessary for the terminal 500, and the WiFi module 170 may be omitted without altering the scope of the invention.

The processor 180 may be the control center of the terminal 500. The processor 180 may utilize a variety of interfaces and links to connect each part of the cellphone, and may perform a variety of functions of the terminal 500 and data processing by performing the software programs and/or modules stored in the memory 120 and invoking the data stored in the memory 120, such that the cellphone may be monitored. Alternatively, the processor 180 may include one or more processing cores, for example, the processor 180 may integrate an application processor and a modem processor, wherein, the application processor may mainly process the operating system, the user interface and the applications, the modem processor may mainly process wireless communication. It is to be understood that the above modem processor may not be integrated in the processor 180.

The terminal 500 may also include a power supply 190 (such as a battery) which may power up each components, for example, the power supply may logically connect with the processor 180 via a power management system, such that the power supply may manage charging, discharging, and power consumption via the power management system. The power supply 190 may also include one or more DC or AC power, a recharging system, a circuitry for detecting power failures, a power converter or inverter, and a power state indicator.

The terminal 500 may also include a camera and a Bluetooth module (not shown), which will not be elaborated herein. Particularly, in an exemplary embodiment, the display unit of the terminal may be a touch screen displayer. The terminal may also include a memory and one or more programs, wherein the one or more programs may be stored in the memory, and may be configured to be performed by one or more processor. The one or more programs may include the method for establishing a data connection provided by the embodiments as illustrated by Fig. 1 and Fig.2.

Although features and elements are described above in particular combinations, one of ordinary skill in the art will appreciate that each feature or element may be used alone, or in any combination with the other feature and elements if no contradiction exists. Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and embodiments be considered as illustrative only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for establishing a data connection, **characterized in that** the method comprises:
receiving (101, 208), via a User Datagram Protocol (UDP)-based Data Transfer Protocol (UDT) module in a present end, a data packet transmitted by a terminal, the data packet carrying an identifier of a target application and transmission data to be transmitted to the target application;
extracting (102, 209) the identifier of the target application;
based on the identifier of the target application and a preset callback function mapping table, determining (103, 210) a target callback function corresponding to the target application, the preset callback function mapping table including at least one identifier of at least one application and at least one corresponding callback function, wherein the target callback function is configured to transmit the transmission data to a data memory address corresponding to the target application;
running (104, 211) the target callback function to transmit the transmission data to the target application,
wherein, before the receiving (101) a data packet transmitted by a terminal, the method further comprises:
receiving (201), via the UDT module, a registration message transmitted by an application in the present end, the registration message carrying an identifier of the application and a callback function;
storing (202) the identifier of the application and the callback function in pairs into the preset callback function mapping table.

2. The method of claim 1, further comprising:
receiving (204), transmitted by the terminal, a request for establishing a connection;
establishing the data connection with the terminal.

3. The method of claim 2, wherein the establishing the data connection with the terminal comprising:
detecting (205) whether an idle port exists in the present end or not;
establishing (206) the data connection with the terminal via the idle port when the idle port exits in the present end.

4. The method of claim 1, wherein the receiving a data packet transmitted by a terminal comprising:
receiving different types of data packets transmitted by the terminal via different data connections established with the terminal, the type of the data packet being determined by at least one of the transmission frequency of the data packet and the size of the data packet.

5. A device for establishing a data connection, **characterized in that** the device comprises:
a receiving module (310) configured to receive, via a User Datagram Protocol (UDP)-based Data Transfer Protocol (UDT) module in a present end, a data packet transmitted by a terminal, the data packet carrying an identifier of a target application and transmission data to be transmitted to the target application;
an extracting module (320) configured to extract the identifier of the target application;
a determining module (330) configured to, based on the identifier of the target application extracted by the extracting module (320) and a preset callback function mapping table, determine a target callback function corresponding to the target application, the preset callback function mapping table including at least one identifier of at least one application and at least one corresponding callback function, wherein the target callback function is configured to transmit the transmission data to a data memory address corresponding to the target application;
a running module (340) configured to run the target callback function determined by the determining module (330) to transmit the transmission data to the target application,
wherein the receiving module (310) is further configured to receive, via the UDT module, a registration message transmitted by an application in the present end, the registration message carrying the identifier of the application and a callback function;
wherein the device further comprises:
a storing module (350) configured to store the identifier of the application and the callback function in pairs into the preset callback function mapping table..

6. The device of claim 5, wherein the receiving module (310) is further configured to receive, transmitted by the terminal, a request for establishing a connection;
the device further comprises:
an establishing module (360) configured to establish the data connection with the terminal.

7. The device of claim 6, further comprising:
a detecting module (370) configured to detect whether an idle port exists in the present end or not;
the establishing module (360) is further configured to establish the data connection with the terminal via the idle port when the detecting module (370) determines that the idle port exists in the present end.

8. The device of claim 5, wherein the receiving module (310) is further configured to receive different types of data packets transmitted by the terminal via different data connections established with the terminal, the type of the data packet being determined by at least one of the transmission frequency of the data packet and the size of the data packet.

9. The device of claim 5, further comprising:
a processor (180);
a memory (120) for storing instructions executable by the processor;
wherein the processor (180) comprises the receiving module (310), the extracting module (320), the determining module (330), the running module (340) and the storing module (350).

10. A storage medium readable by a computer and having stored therein a computer program including instructions for executing the steps of a method for establishing a data connection according to any one of claims 1 to 4.

11. A computer program product including instructions for executing the steps of a method for establishing a data connection according to any one of claims 1 to 4 when said program is executed by a computer.

## Patentansprüche

1. Verfahren zum Aufbauen einer Datenverbindung, **dadurch gekennzeichnet, dass** das Verfahren Folgendes aufweist:
Empfangen (101, 208) eines durch ein Endgerät übertragenen Datenpakets über ein User Datagram Protocol- (UDP) -basiertes Data Transfer Protocol- (UDT) -Modul in einem vorliegenden Ende, wobei das Datenpaket eine Kennung einer Zielanwendung und an die Zielanwendung zu übertragende Übertragungsdaten trägt;
Extrahieren (102, 209) der Kennung der Zielanwendung;
auf Basis der Kennung der Zielanwendung und einer vorgegebenen Rückruffunktions-Zuordnungstabelle Bestimmen (103, 210) einer der Zielanwendung entsprechenden Zielrückruffunktion, wobei die vorgegebene Rückruffunktions-Zuordnungstabelle wenigstens eine Kennung wenigstens einer Anwendung und wenigstens eine entsprechende Rückruffunktion enthält, wobei die Zielrückruffunktion zum Übertragen der Übertragungsdaten an eine der Zielanwendung entsprechende Datenspeicheradresse konfiguriert ist;
Ausführen (104, 211) der Zielrückruffunktion zum Übertragen der Übertragungsdaten an die Zielanwendung,
wobei das Verfahren vor dem Empfangen (101) eines durch ein Endgerät übertragenen Datenpakets ferner Folgendes aufweist:
Empfangen (201) einer durch eine Anwendung im vorliegenden Ende übertragenen Registrierungsnachricht durch das UDT-Modul, wobei die Registrierungsnachricht eine Kennung der Anwendung und eine Rückruffunktion trägt;
Abspeichern (202) der Kennung der Anwendung und der Rückruffunktion paarweise in der vorgegebenen Rückruffunktions-Zuordnungstabelle.

2. Verfahren nach Anspruch 1, das ferner Folgendes aufweist:
Empfangen (204) einer durch das Endgerät übertragenen Anforderung für den Aufbau einer Verbindung;
Aufbauen der Datenverbindung mit dem Endgerät.

3. Verfahren nach Anspruch 2, wobei das Aufbauen der Datenverbindung mit dem Endgerät Folgendes aufweist:
Erkennen (205), ob im vorliegenden Ende ein im Leerlauf befindlicher Port vorhanden ist oder nicht;
Aufbauen (206) der Datenverbindung mit dem Endgerät über den im Leerlauf befindlichen Port, wenn der im Leerlauf befindliche Port im vorliegenden Ende vorhanden ist.

4. Verfahren nach Anspruch 1, wobei das Empfangen eines durch ein Endgerät übertragenen Datenpakets Folgendes aufweist:
Empfangen verschiedener Typen von Datenpaketen, die durch das Endgerät über verschiedene mit dem Endgerät aufgebaute Datenverbindungen übertragen werden, wobei der Typ des Datenpakets durch die Übertragungsfrequenz des Datenpakets und/oder die Größe des Datenpakets bestimmt wird.

5. Vorrichtung zum Aufbauen einer Datenverbindung, **dadurch gekennzeichnet, dass** die Vorrichtung Folgendes aufweist:
ein Empfangsmodul (310), das konfiguriert ist zum Empfangen eines durch ein Endgerät übertragenen Datenpakets über ein User Datagram Protocol- (UDP) -basiertes Data Transfer Protocol-(UDT) -Modul in einem vorliegenden Ende, wobei das Datenpaket eine Kennung einer Zielanwendung und an die Zielanwendung zu übertragende Übertragungsdaten trägt;
ein Extraktionsmodul (320), das zum Extrahieren der Kennung der Zielanwendung konfiguriert ist;
ein Bestimmungsmodul (330), das konfiguriert ist zum Bestimmen, auf Basis der durch das Extraktionsmodul (320) extrahierten Kennung der Zielanwendung und einer vorgegebenen Rückruffunktions-Zuordnungstabelle, einer der Zielanwendung entsprechenden Zielrückruffunktion, wobei die vorgegebene Rückruffunktions-Zuordnungstabelle wenigstens eine Kennung wenigstens einer Anwendung und wenigstens eine entsprechende Rückruffunktion enthält, wobei die Zielrückruffunktion zum Übertragen der Übertragungsdaten an eine der Zielanwendung entsprechende Datenspeicheradresse konfiguriert ist;
ein Ausführmodul (340), das zum Ausführen der durch das Bestimmungsmodul (330) bestimmten Zielrückruffunktion zum Übertragen der Übertragungsdaten an die Zielanwendung konfiguriert ist,
wobei das Empfangsmodul (310) ferner zum Empfangen einer durch eine Anwendung im vorliegenden Ende übertragenen Registrierungsnachricht durch das UDT-Modul konfiguriert ist, wobei die Registrierungsnachricht die Kennung der Anwendung und eine Rückruffunktion trägt;
wobei die Vorrichtung ferner Folgendes aufweist:
ein Speichermodul (350), das zum paarweisen Abspeichern der Kennung der Anwendung und der Rückruffunktion in der vorgegebenen Rückruffunktions-Zuordnungstabelle konfiguriert ist.

6. Vorrichtung nach Anspruch 5, wobei das Empfangsmodul (310) ferner zum Empfangen einer durch das Endgerät übertragenen Anforderung für den Aufbau einer Verbindung konfiguriert ist;
wobei die Vorrichtung ferner Folgendes aufweist:
ein Aufbaumodul (360), das zum Aufbauen der Datenverbindung mit dem Endgerät konfiguriert ist.

7. Vorrichtung nach Anspruch 6, die ferner Folgendes aufweist:
ein Erkennungsmodul (370), das zum Erkennen, ob im vorliegenden Ende ein im Leerlauf befindlicher Port vorhanden ist oder nicht, konfiguriert ist;
wobei das Aufbaumodul (360) ferner konfiguriert ist zum Aufbauen der Datenverbindung mit dem Endgerät über den im Leerlauf befindlichen Port, wenn das Bestimmungsmodul (370) bestimmt, dass der im Leerlauf befindliche Port im vorliegenden Ende vorhanden ist.

8. Vorrichtung nach Anspruch 5, wobei das Empfangsmodul (310) ferner konfiguriert ist zum Empfangen verschiedener Typen von Datenpaketen, die durch das Endgerät über verschiedene mit dem Endgerät aufgebaute Datenverbindungen übertragen werden, wobei der Typ des Datenpakets durch die Übertragungsfrequenz des Datenpakets und/oder die Größe des Datenpakets bestimmt wird.

9. Vorrichtung nach Anspruch 5, die ferner Folgendes aufweist:
einen Prozessor (180);
einen Speicher (120) zum Speichern von durch den Prozessor ausführbaren Anweisungen;
wobei der Prozessor (180) das Empfangsmodul (310), das Extraktionsmodul (320), das Bestimmungsmodul (330), das Ausführmodul (340) und das Speichermodul (350) aufweist.

10. Speichermedium, das durch einen Computer lesbar ist und in dem ein Computerprogramm mit Anweisungen zum Ausführen der Schritte eines Verfahrens zum Aufbauen einer Datenverbindung nach einem der Ansprüche 1 bis 4 gespeichert ist.

11. Computerprogrammprodukt mit Anweisungen zum Ausführen der Schritte eines Verfahrens zum Aufbauen einer Datenverbindung nach einem der Ansprüche 1 bis 4, wenn das genannte Programm durch einen Computer ausgeführt wird.

## Revendications

1. Procédé d'établissement d'une connexion de données, **caractérisé en ce que** le procédé comprend :
recevoir (101, 208) via un module de Data Transfer Protocol (UDT) basé sur un User Datagram Protocol (UDP) dans une présente extrémité, un paquet de données transmis par un terminal, le paquet de données portant un identificateur d'une application cible et des données de transmission à transmettre à l'application cible ;
extraire (102, 209) l'identificateur de l'application cible ;
sur la base de l'identificateur de l'application cible et d'une table de mappage de fonction de rappel préétablie, déterminer (103, 210) une fonction de rappel cible correspondant à l'application cible, la table de mappage de fonction de rappel préétablie comprenant au moins un identificateur d'au moins une application et au moins une fonction de rappel correspondante, où la fonction de rappel cible est configurée pour transmettre les données de transmission à une adresse en mémoire de données correspondant à l'application cible ;
passer (104, 211) la fonction de rappel cible pour transmettre les données de transmission à l'application cible ;
où, avant de recevoir (101) un paquet de données transmis par un terminal, le procédé comprend en outre :
recevoir (201), via le module UDT, un message d'enregistrement transmis par une application dans la présente extrémité, le message d'enregistrement portant un identificateur de l'application et une fonction de rappel ;
stocker (202) l'identificateur de l'application et la fonction de rappel en paires dans la table de mappage de fonction de rappel préétablie.

2. Procédé selon la revendication 1, comprenant en outre :
recevoir (204), transmise par le terminal, une requête d'établissement d'une connexion ;
établir la connexion de données avec le terminal.

3. Procédé selon la revendication 2, dans lequel l'établissement de la connexion de données avec le terminal comprend :
détecter (205) si un port libre existe ou non dans la présente extrémité ;
établir (206) la connexion de données avec le terminal via le port libre lorsque le port libre existe dans la présente extrémité.

4. Procédé selon la revendication 1, dans lequel le fait de recevoir un paquet de données transmis par un terminal comprend :
recevoir différents types de paquets de données transmis par le terminal via différentes connexions de données établies avec le terminal, le type de paquet de données étant déterminé par au moins l'une d'entre la fréquence de transmission du paquet de données et la taille du paquet de données.

5. Dispositif d'établissement d'une connexion de données, **caractérisé en ce que** le dispositif comprend :
un module de réception (310) configuré pour recevoir via un module de Data Transfer Protocol (UDT) basé sur un User Datagram Protocol (UDP) dans une présente extrémité, un paquet de données transmis par un terminal, le paquet de données portant un identificateur d'une application cible et des données de transmission à transmettre à l'application cible ;
un module d'extraction (320) configuré pour extraire l'identificateur de l'application cible ;
un module de détermination (330) configuré pour, sur la base de l'identificateur de l'application cible extrait par le module d'extraction (320) et d'une table de mappage de fonction de rappel préétablie, déterminer une fonction de rappel cible correspondant à l'application cible, la table de mappage de fonction de rappel préétablie comprenant au moins un identificateur d'au moins une application et au moins une fonction de rappel correspondante, où la fonction de rappel cible est configurée pour transmettre les données de transmission à une adresse en mémoire de données correspondant à l'application cible ;
un module de passage (340) configuré pour passer la fonction de rappel cible, déterminée par le module de détermination (330), pour transmettre les données de transmission à l'application cible ;
où le module de réception (310) est configuré en outre pour recevoir, via le module UDT, un message d'enregistrement transmis par une application dans la présente extrémité, le message d'enregistrement portant l'identificateur de l'application et une fonction de rappel ;
où le dispositif comprend en outre :
un module de stockage (350) configuré pour stocker l'identificateur de l'application et la fonction de rappel en paires dans la table de mappage de fonction de rappel préétablie.

6. Dispositif selon la revendication 5, dans lequel le module de réception (310) est configuré en outre pour recevoir, transmise par le terminal, une requête d'établissement de connexion ;
le dispositif comprend en outre :
un module d'établissement (360) configuré pour établir la connexion de données avec le terminal.

7. Dispositif selon la revendication 6, comprenant en outre :
un module de détection (370) configuré pour détecter si un port libre existe ou non dans la présente extrémité ;
le module d'établissement (360) est configuré en outre pour établir la connexion de données avec le terminal via le port libre lorsque le module de détection (370) détermine que le port libre existe dans la présente extrémité.

8. Dispositif selon la revendication 5, dans lequel le module de réception (310) est configuré en outre pour recevoir différents types de paquets de données transmis par le terminal via différentes connexions de données établies avec le terminal, le type de paquet de données étant déterminé par au moins l'une d'entre la fréquence de transmission du paquet de données et la taille du paquet de données.

9. Dispositif selon la revendication 5, comprenant en outre :
un processeur (180) ;
une mémoire (120) pour stocker des instructions exécutables par le processeur ;
où le processeur (180) comprend le module de réception (310), le module d'extraction (320), le module de détermination (330), le module de passage (340) et le module de stockage (350).

10. Support de stockage lisible par un ordinateur et ayant stocké dessus un programme informatique comprenant des instructions pour exécuter les étapes d'un procédé d'établissement de connexion de données selon l'une quelconque des revendications 1 à 4.

11. Produit de programme informatique comprenant des instructions pour exécuter les étapes d'un procédé d'établissement de connexion de données selon l'une quelconque des revendications 1 à 4 lorsque ledit programme est exécuté par un ordinateur.
